# EUROPEAN PATENT SPECIFICATION

(11) **EP 3 257 696 B1**
(45) Date of publication and mention of the grant of the patent: **01.09.2021**
(21) Application number: 16174520.3
(22) Date of filing: 15.06.2016
(51) Int. Cl.: B60K 15/05, B60K 15/03

(54) **METHOD AND DEVICE FOR OPERATING A LID OF A CHARGING-PORT OR FUELING PORT OF A VEHICLE**
VERFAHREN UND VORRICHTUNG ZUM BETÄTIGEN EINES DECKELS EINES LADEANSCHLUSSES ODER TANKEINFÜLLANSCHLUSSES EINES FAHRZEUGS
PROCÉDÉ ET DISPOSITIF D'OPÉRATION D'UN ORIFICE DE CHARGE OU D'ALIMENTATION EN CARBURANT D'UN VÉHICULE

(43) Date of publication of application: 20.12.2017
(73) Proprietor: Conti Temic microelectronic GmbH, 90411 Nürnberg (DE); Application Solutions (Electronics and Vision) Limited, Burgess Hill, West Sussex, RH15 9TT (GB)
(72) Inventor: Jones, Graham, Brighton, BN1 7BR (GB); Gillott, Robert, Lewes, BN7 1DD (GB); Hantsch, Eric, Brighton, BN1 3RQ (GB); Bopp, Thomas, 89129 Langenau (DE); Weller, Dave, Laughton, BN8 6DF (GB)
(74) Representative: Continental Corporation

(56) References cited:
- WO-A1-2015/114155
- DE-A1-102012 021 518
- US-A1- 2009 079 225

## Description

The present invention relates to a method and a corresponding device for operating the lid of a charging-port or fueling port of a vehicle.

Fueling ports, in particular of vehicles having combustion engines, and charging-ports, in particular of electric cars or hybrid cars, are usually covered by closable lids. Such lids are also called fuel cap, tank lid, filler flap and the like. The lids themselves are usually locked by a locking system, which may only be unlocked by a key or by means of a switch inside the vehicle compartment. An appropriate locking system is, for example, known from WO 2013/041081 A2.

DE 10 2012 215 354 A1 already discloses a method for automatically unlocking the lid of a fueling port of a vehicle, wherein a distance to gas station or fuel pump is determined, and wherein the lid is automatically unlocked if the determined distance is below a predetermined threshold.

By automatically unlocking the lid depending on the distance to the gas station or fuel pump, the lid no longer has to be unlocked manually by the driver before the refuelling or recharging process. In particular in case of a rental vehicle, this enhances the convenience for the driver, for example if the driver doesn't know how the lid of the respective vehicle can be unlocked.

However, even with the method and device provided by DE 10 2012 215 354 A1, the driver still has to open the lid manually if he wants to plug in the fuel nozzle or charging plug into the respective port behind the lid. The mechanism for opening the lids usually differs between vehicles from different manufacturers. For instance, some lids have to be pressed down at a very specific region or point. This region or point is, typically, neither marked nor is it intuitively apparent to the driver where it might be. Additionally, the manual opening of a lid generally results in dirty hands.

DE 10 2012 021 518 A1 discloses a method of supporting a fueling or charging operation of an energy storage of a vehicle, with the steps of automatically detecting an energy dispensing device in the area of a supply opening of the energy storage of the vehicle and, upon detection, automatically opening a closing element of the supply opening so that the position of the closing element allows connecting of the energy dispensing device.

It is, therefore, an object of the present invention to provide an improved method and device for operating the lid of a fueling port or charging-port of a vehicle.

This object is solved by the subject matter of the independent claims. Further improvements are the subject matter of the dependent claims.

According to the present invention, a method for operating a lid of a fueling port or charging-port of a vehicle is provided. The method comprises the steps: detecting one or more conditions indicating an imminent fueling or charging operation and, if the one or more conditions are detected, automatically opening the lid.

It shall be apparent, that the term "opening" may of course also comprise an unlocking of the lid, in particular an automatically unlocking, and in particular before opening the lid. In this case, the unlocking of the lid may be performed, for instance, according to the previously mentioned prior art.

It shall further be apparent that the term "opening", in the context of the present invention, comprises a movement of the lid from a closed position into an open position, in particular such that the driver can plug the fuel nozzle or the charging plug into the respective port behind the lid, perhaps after removing another safety lock, like a screw cap, from inside the port. The movement of the lid from the closed position to the open position can be, for example, a pivoting or a swinging motion, for example around a hinge or an otherwise construed turning mechanism. The movement may, for example, be induced by controlling a suitable electromechanical drive or motor.

According to a preferred embodiment of the present invention, at least two conditions indicating an imminent fueling or charging operation are detected, wherein the lid is automatically opened only if the at least two conditions are detected, thus making the detection of an imminent fueling or charging operation more reliable.

According to the present invention, images are captured with at least one vehicle-mounted camera, wherein at least one of the one or more conditions (or respectively at least one of the at least two conditions) is detected by means of image processing of the captured images.

According to the present invention, the at least one condition detected by means of image processing is: recognizing a symbol or sign in the captured images, the symbol or sign being indicative of an imminent fueling or charging operation. Such a symbol or sign may be, for example, a fuel/charge symbol or sign, a fueling/charge designation or a corresponding letter or abbreviation, a label or trademark of a fuel/charge supplier or a corresponding emblem, logo or the like, being printed or being otherwise applied, for instance, onto a fuel dispensing nozzle, gas pump, fuel station, charging plug or charging station.

According to the invention, the symbol or sign has to be recognized with a certain size or dimension in the images of a vehicle-mounted camera, in particular with a size above a certain threshold.

According to a preferred embodiment of the present invention, the symbol or sign has to be recognized at a certain side of the vehicle, for example on the left or on the right side of the vehicle, particularly on that side of the vehicle on which the fueling port or charging-port is located.

According to another preferred embodiment of the present invention, at least one of the one or more conditions (or respectively at least one of the at least two conditions) is, that the vehicle is in a stationary state. A stationary state of the vehicle may be detected based on different criteria, wherein a combination of at least two criteria is preferred, thus making the detection more reliable. A first criterion in this context may be a detection that the vehicle speed is below a specified threshold or equal to zero. A second criterion may be a detection that a transmission setting of the vehicle is in a "park" setting, a "neutral" setting, or in a first gear position. A third criterion may be, for instance, that a handbrake of the vehicle is applied.

Once the lid of the fueling port or charging-port is automatically opened according to the invention, a visual and/or audible notification may be given to the driver.

In the context of the present invention also equivalents or further conditions may be used in order to detect an imminent fueling or charging operation. A further condition may be, for instance, the detection of a person or the vehicle driver in the vicinity of the lid of the fueling port or charging-port of the vehicle. The detection of a person in the vicinity of the lid can be implemented by means of image processing of images captured by one or multiple vehicle-mounted cameras. The identification of the person as being the vehicle driver may be performed through camera-based face recognition and/or radio-based, for example via the vehicle key.

According to the present invention, also a device adapted for operating a lid of a fueling port or charging-port of a vehicle according to a method according to one of the previously described embodiments is provided.

The device may be, for instance, an electronic control unit (ECU) comprising a processor or processing means. The electronic control unit may further comprise a computer program product with computer executable code stored thereon which, when executed by the processor or processing means, executes the method according to the invention.

The device may further comprise means for detecting the one or more conditions indicating an imminent fueling or charging operation, in the form of a vehicle-mounted camera. Alternatively or additionally, the device may be electrically connected with means for detecting the one or more conditions indicating an imminent fueling or charging operation, in the form of a vehicle-mounted camera, and/or with the vehicle BUS system.

The device may further comprise means for opening the lid of the fueling port or charging-port of the vehicle. Such means may be, for instance, an electromechanical drive. Alternatively, the device may be electrically connected with such means for opening the lid.

The invention also relates to a vehicle comprising the aforementioned device.

The above identified aspects and embodiments may be combined with each other where possible. Further embodiments and implementations of the present invention may also comprise combinations of embodiments and features of the present invention.

The present invention will be described in the following by a preferred embodiment based on the accompanying drawing.

In the following description, details are provided to describe an embodiment of the present specification. It shall be apparent to one skilled in the art, however, that other embodiments of the invention may be practiced without such details.

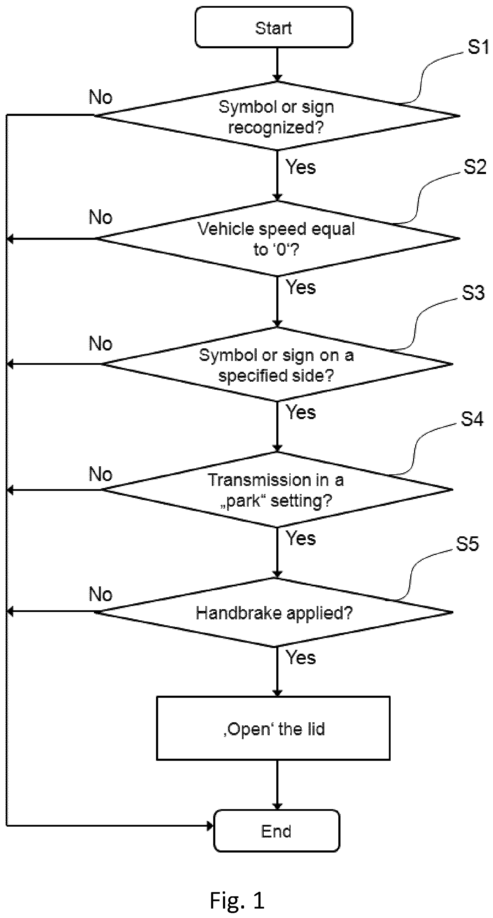

Fig. 1 shows a flow-chart of a preferred embodiment of the method according to the invention, which may be implemented as a computer program within a device according to the second aspect of the invention, in particular in terms of computer executable code stored on a computer program product, which, when executed by processing means, executes the method according to Fig. 1.

The embodiment according to Fig. 1 comprises multiple process steps S1-S5, wherein each step comprises the detection of a different condition, and wherein each condition indicates an imminent fueling or charging operation. According to the invention, once all conditions are met, i.e. detected or recognized, the lid of the fueling port or charging-port of the vehicle is automatically opened (",Open' the lid"). Otherwise, the process is ended ("End") and may return to the starting point ("Start").

In step S1, it is detected whether a symbol or sign which indicates an imminent fueling or charging operation is recognized. This is done by means of image processing of images captured by a vehicle-mounted camera. The vehicle-mounted camera can be for example a forward-facing camera, which may be, for example, placed behind the windshield inside the vehicle. The camera may also be a camera which mounted to the rear of the vehicle, e.g. a so called rear-view camera, or a camera which is mounted to one side of the vehicle, e.g. a so called mirror replacement camera or a camera of a so called surround view camera system. Thus, for executing step S1, a camera may be used, which is already present on the vehicle and may be used for the implementation of further driver assistance functions.

The recognized symbol or sign may be for example one of multiple specified symbols or signs, like labels, brands or trademarks of known fuel suppliers. Such labels are usually printed or otherwise provided on the fueling nozzles and/or fuel pumps of a fueling station, but also on charging plugs and/or charging stations. The symbols or signs may also be commonly used indications like "diesel", "oil", "petrol", "gas" or the like, which are also usually provided in a similar manner at fueling or charging stations. Also other indicia may be used such as barcodes or the like, in particular specifically arranged for the purpose onto components of a refueling or recharging station.

The recognition of the symbol or sign can be performed by means of image processing of images captured, for instance, by one of the previously mentioned vehicle-mounted cameras. Further, the recognition may be performed by using well-known image processing techniques like pattern recognition and/or pattern matching and/or by using classifiers. Also other suitable object or shape recognition algorithms may be used to detect a refueling or recharging station and/or to access the proximity to such.

In addition to the mere detection of a specified symbol or sign, it is further detected whether the respective symbol or sign is recognized within a specified distance to the vehicle. As most symbols and signs, typically, have a certain size or at least dimensions within a certain ranges, in particular such symbols and signs which are placed onto fuel nozzles and the like, the distance between the vehicle and the respective symbol or sign is achieved by recognizing the size of the respective symbol or sign within the camera images and by calculating the distance, in particular based on the known intrinsic and extrinsic parameters of the camera.

According to Fig. 1, if a specified symbol or sign has been recognized ("Yes"), in particular within a specified distance to the vehicle, then the method proceeds with the second step S2. Otherwise ("No"), the program is ended ("End") and may be restarted.

In step 2, it is detected whether the vehicle speed is equal to zero ('0'), in particular for detecting whether the vehicle is in a stationary state. There are various possible ways to obtain the current vehicle speed. The current vehicle speed may, for instance, be obtained from the vehicle BUS system or from an accelerometer. Alternatively or in addition, the vehicle speed may also be obtained from tracking features and/or measuring the optical flow within the images of the previously mentioned vehicle-mounted cameras.

It shall be apparent that, instead of or in addition to "vehicle speed equal to zero", also a certain threshold for the vehicle speed may be used for detecting a stationary state of the vehicle, e.g. "vehicle speed less than or equal to 5 km/h" or similar.

According to Fig. 1, if it is detected that the vehicle speed is equal to Zero ("Yes"), then the method proceeds with the third step S3. Otherwise ("No"), the program is ended ("End") and may be restarted.

In step 3, it is detected whether the specified symbol or sign is detected on a specified side of the vehicle. In particular if the recognition of the symbol or sign is performed by means of image processing of images captured by a vehicle-mounted camera, then step 3, i.e. the detection of the side on which the symbol or sign is recognized, may also be performed by means of image processing, preferably by taking into account the known mounting positions and orientations of the previously mentioned vehicle-mounted cameras. The specified side of the vehicle is preferably that side of the vehicle, on which the fueling port or charging-port is located.

According to Fig. 1, if a specified symbol or sign has been recognized on the specified side of the vehicle ("Yes"), in particular within a specified distance and/or directly adjacent to the vehicle and/or within a defined angular range on the specified side of the vehicle, then the method proceeds with the fourth step S4. Otherwise ("No"), the program is ended ("End") and may be restarted.

In step 4 it is detected whether a setting of the vehicles transmission is in a "park" setting, in particular as a second criterion for detecting whether the vehicle is in a stationary state. Step 4 is particularly relevant for vehicles having an automatic transmission, where the "park" setting is a common setting if the vehicle is in a stationary state. It shall be apparent to a skilled person that the term "park" setting is to be understood as a synonymous for equal or similar transmission settings which may be applied in a stationary or parked state of the respective vehicle, either automatically by an automatic transmission control or manually by the driver. Alternatively or in addition to detecting whether the transmission is in a "park" setting, it may also be detected whether the transmission is in a "neutral" setting or in a first gear position, particularly because these settings/positions are used in a similar manner as the "park" setting if the vehicle is in a stationary state.

According to Fig. 1, if it is detected that the transmission of the vehicle is in a "park" setting ("Yes"), then the method proceeds with the fifth step S5. Otherwise ("No"), the program is ended ("End") and may be restarted.

In step 5 it is detected whether the handbrake of the vehicle is applied, in particular as a third criterion for detecting whether the vehicle is in a stationary state. The current state of the handbrake may be obtained for example from the vehicle BUS system.

According to Fig. 1, if it is detected that the handbrake of the vehicle is applied, then all conditions are met and, according to the invention, the lid of the fueling port or charging-port of the vehicle is automatically opened (",Open' the lid"). Otherwise ("No"), the program is ended ("End") and may be restarted.

It shall be apparent to a skilled person, that the previously described embodiment may be amended in various manner without leaving the present invention. In particular, it is still within the scope of the present invention if not all steps S1 - S5 are implemented. It is also still within the scope of the invention if steps S1 to S5 are executed in a different order and/or if steps S1 to S5, or just a selection thereof, are combined with further process steps, which have not been described in the context of the embodiment of Fig. 1.

## Claims

1. A method for operating a lid of a fueling port or charging-port of a vehicle, comprising:
- detecting one or more conditions indicating an imminent fueling or charging operation;
- automatically opening the lid if the one or more conditions are detected;
- capturing images with at least one vehicle-mounted camera;
- detecting at least one of the one or more conditions by means of image processing of the captured images;
- wherein the at least one condition detected by means of image processing is recognizing a symbol or sign with a certain size or dimension in the captured images which indicates an imminent fueling or charging operation.

2. The method according to claim 1, comprising:
- detecting at least two conditions indicating an imminent fueling or charging operation;
- automatically opening the lid if the at least two conditions are detected.

3. The method according to claim 1 or 2, wherein the at least one condition detected by means of image processing is
- recognizing the symbol or sign on a specified side of the vehicle.

4. The method according to one of the preceding claims, wherein at least one of the one or more conditions is
- detecting that the vehicle is in a stationary state.

5. The method according to claim 4, wherein the stationary state is detected if the vehicle speed is below a specified threshold or equal to zero.

6. The method according to claim 4 or 5, wherein the stationary state is detected if a transmission setting of the vehicle is in a "park" or "neutral" setting or in a first gear position.

7. The method according to one of claims 4 to 6, wherein the stationary state is detected if a handbrake of the vehicle is applied.

8. Device, adapted for operating a lid of a fueling port or charging-port of a vehicle according to a method according to one of the preceding claims, comprising or being connected with
- means for controlling opening means for opening the lid of the fueling port or charging-port of the vehicle;
- at least one vehicle mounted camera for capturing images;
- means for detecting at least one of the one or more conditions indicating an imminent fueling or charging operation by means of image processing of the captured images,
- wherein the at least one condition detected by means of image processing is recognizing a symbol or sign with a certain size or dimension in the captured images which indicates an imminent fueling or charging operation.

9. Vehicle comprising a device according to claim 8.

## Patentansprüche

1. Verfahren zum Betätigen eines Deckels eines Tankanschlusses oder Ladeanschlusses eines Fahrzeugs, das aufweist:
- Detektieren einer oder mehrerer Bedingungen, die einen bevorstehenden Tank- oder Ladevorgang anzeigen;
- automatisches Öffnen des Deckels, wenn die eine oder mehreren Bedingungen detektiert werden;
- Erfassen von Bildern mit mindestens einer am Fahrzeug angebrachten Kamera;
- Detektieren mindestens einer der einen oder mehreren Bedingungen mittels einer Bildverarbeitung der erfassten Bilder;
- wobei die mindestens eine Bedingungen, die mittels einer Bildverarbeitung detektiert wird, Erkennen eines Symbols oder Zeichens mit einer gewissen Größe oder Abmessung in den erfassten Bildern ist, das einen bevorstehenden Tank- oder Ladevorgang anzeigt.

2. Verfahren nach Anspruch 1, das aufweist:
- Detektieren mindestens zweier Bedingungen, die einen bevorstehenden Tank- oder Ladevorgang anzeigen;
- automatisches Öffnen des Deckels, wenn die mindestens zwei Bedingungen detektiert werden.

3. Verfahren nach Anspruch 1 oder 2, wobei die mindestens eine Bedingung, die mittels einer Bildverarbeitung detektiert wird, ist
- Erkennen des Symbols oder Zeichens auf einer festgelegten Seite des Fahrzeugs.

4. Verfahren nach einem der vorhergehenden Ansprüche, wobei mindestens eine der einen oder mehreren Bedingungen ist
- Detektieren, dass sich das Fahrzeug in einem stationären Zustand befindet.

5. Verfahren nach Anspruch 4, wobei der stationäre Zustand detektiert wird, wenn die Fahrzeuggeschwindigkeit unter einem festgelegten Schwellenwert oder gleich null ist.

6. Verfahren nach Anspruch 4 oder 5, wobei der stationäre Zustand detektiert wird, wenn eine Getriebeeinstellung des Fahrzeugs in einer "Park"- oder "Neutral"-Einstellung oder in einer ersten Gangstellung ist.

7. Verfahren nach einem der Ansprüche 4 bis 6, wobei der stationäre Zustand detektiert wird, wenn eine Handbremse des Fahrzeugs betätigt wird.

8. Vorrichtung, die zum Betätigen eines Deckels eines Tankanschlusses oder Ladeanschlusses eines Fahrzeugs gemäß einem Verfahren nach einem der vorhergehenden Ansprüche ausgelegt ist, die Folgendes aufweist oder damit verbunden ist
- Mittel zum Steuern von Öffnungsmitteln zum Öffnen des Deckels des Tankanschlusses oder Ladeanschlusses des Fahrzeugs;
- mindestens eine am Fahrzeug angebrachte Kamera zum Erfassen von Bildern;
- Mittel zum Detektieren mindestens einer der einen oder mehreren Bedingungen, die einen bevorstehenden Tank- oder Ladevorgang anzeigen, mittels einer Bildverarbeitung der erfassten Bilder,
- wobei die mindestens eine Bedingungen, die mittels einer Bildverarbeitung detektiert wird, Erkennen eines Symbols oder Zeichens mit einer gewissen Größe oder Abmessung in den erfassten Bildern ist, das einen bevorstehenden Tank- oder Ladevorgang anzeigt.

9. Fahrzeug, das eine Vorrichtung nach Anspruch 8 aufweist.

## Revendications

1. Procédé d'actionnement d'un couvercle d'un orifice de ravitaillement en carburant ou d'un orifice de charge d'un véhicule, comprenant :
- la détection d'une ou de plusieurs conditions indiquant une opération imminente de ravitaillement en carburant ou de charge ;
- l'ouverture automatique du couvercle si les une ou plusieurs conditions sont détectées ;
- la capture d'images à l'aide d'au moins une caméra montée sur le véhicule ;
- la détection d'au moins une des une ou plusieurs conditions au moyen d'un traitement d'images des images capturées ;
- l'au moins une condition détectée au moyen d'un traitement d'images consistant en la reconnaissance d'un symbole ou d'un panneau possédant une certaine taille ou dimension dans les images capturées, indiquant une opération imminente de ravitaillement en carburant ou de charge.

2. Procédé selon la revendication 1, comprenant :
- la détection d'au moins deux conditions indiquant une opération imminente de ravitaillement en carburant ou de charge ;
- l'ouverture automatique du couvercle si les au moins deux conditions sont détectées.

3. Procédé selon la revendication 1 ou 2, dans lequel l'au moins une condition détectée au moyen d'un traitement d'images consiste en
- la reconnaissance du symbole ou du panneau d'un côté spécifié du véhicule.

4. Procédé selon l'une des revendications précédentes, dans lequel au moins une des une ou plusieurs conditions consiste en
- la détection que le véhicule occupe un état immobile.

5. Procédé selon la revendication 4, dans lequel l'état immobile est détecté si la vitesse du véhicule est inférieure à un seuil spécifié ou égale à zéro.

6. Procédé selon la revendication 4 ou 5, dans lequel l'état immobile est détecté si une position de transmission du véhicule occupe une position "parking" ou "neutre" ou une position en première vitesse.

7. Procédé selon l'une des revendications 4 à 6, dans lequel l'état immobile est détecté si un frein à main du véhicule est appliqué.

8. Dispositif, adapté à actionner un couvercle d'un orifice de ravitaillement en carburant ou d'un orifice de charge d'un véhicule selon un procédé selon l'une des revendications précédentes, comprenant ou étant relié à
- des moyens de commande de moyens d'ouverture destinés à ouvrir le couvercle de l'orifice de ravitaillement en carburant ou de l'orifice de charge du véhicule ;
- au moins une caméra montée sur le véhicule destinée à capturer des images ;
- des moyens de détection d'au moins une des une ou plusieurs conditions indiquant une opération imminente de ravitaillement en carburant ou de charge au moyen d'un traitement d'images des images capturées,
- l'au moins une condition détectée au moyen d'un traitement d'images consistant en la reconnaissance d'un symbole ou d'un panneau possédant une certaine taille ou dimension dans les images capturées, indiquant une opération imminente de ravitaillement en carburant ou de charge.

9. Véhicule comprenant un dispositif selon la revendication 8.
